# FASCICULE DE BREVET EUROPEEN

(11) **EP 1 995 362 B1**
(45) Date de publication et mention de la délivrance du brevet: **26.10.2011**
(21) Numéro de dépôt: 08352008.0
(22) Date de dépôt: 19.05.2008
(51) Int. Cl.: D01G 11/04

(54) **Procédé de fabrication d'un fil en filature de type cycle carde, à partir de déchets textiles**
Herstellungsverfahren von Fasergarn aus Textilabfällen
Method for manufacturing a spun thread using textile waste

(30) Priorité: 22.05.2007 FR 0703608
(43) Date de publication de la demande: 26.11.2008
(73) Titulaire: Filature du Parc, 81260 Brassac (FR)
(72) Inventeur: Lodetti, Fabrice, 81260 Brassac (FR)
(74) Mandataire: Morelle, Guy Georges Alain

(56) Documents cités:
- EP-A- 1 236 817
- DE-A1- 19 530 715
- FR-A- 1 317 189
- US-B1- 6 212 738

## Description

La présente invention se rapporte aux filatures de type cycle carde, plus particulièrement à la fabrication de fil selon cette techniques de filature, à partir de déchets textiles.

L'art antérieur enseigne des procédés de fabrication de fil en filature de type cycle carde, à partir de déchets textiles, dont un exemple est décrit ci-dessous :
- la matière première est constituée de vieux tricots ou de déchets de coupe de bonneterie ; un tri par nuances de coloris et de composants est effectué ;
- les tricots sont ensuite délissés afin d'obtenir des déchets de mailles, et les fournitures de type accessoires, telles que boutons métalliques, plastiques, fermetures éclairs, étiquettes, etc, sont éliminées ;
- les déchets de mailles sont effilochés afin de retransformer la maille en fibres, dans des effilocheuses conventionnelles ;
- un feutre de faible poids est ensuite réalisé à partir de ces fibres afin d'obtenir un coloris précis ; le coloris recherché est obtenu sans teinture additionnelle, simplement par mélange de couleurs, comme pour la peinture par exemple;
- les fibres ainsi déterminées pour le feutre recherché sont ensuite constituées en grande quantité pour la fabrication industrielle du fil ;
- les fibres sont ensuite préparées en salle de mélange ; les différents coloris et composants de déchets (fibres de différentes natures) sont mélangés en double cycle dans les machines suivantes : battoir, loup brisoir, casiers tournants, répartiteur d'ensimage, casier grignoteur ;
- les fibres mélangées sont ensuite prises en fabrication sur un assortiment de cardes, afin d'être mises au poids pour l'obtention de mèches enroulées à partir desquelles les fils seront respectivement réalisés à l'étape suivante;
- les rouleaux de mèches sont passés aux continus à filer, chaque mèche est dévidée de son rouleau, et subit des opérations de torsion et d'étirage ; le fil est mis au poids et enroulé sur des canettes ;
- les canettes de fils suivent ensuite plusieurs étapes de transformation, en vue du bobinage final sur cônes, afin que les fils de plusieurs canettes soit assemblés bout à bout et éventuellement retordus pour des fils moulinés, pour former des cônes chacun d'une longueur déterminée de fil enroulé, étiquetés et emballés en cartons ou palettes filmés.

DE 195 30 715 A1 décrit aussi un tel procédé. Un tel procédé présente plusieurs inconvénients, et essentiellement de ne pas proposer un fil suffisamment résistant, impliquant qu'il ne peut être constitué à 100% de matière recyclée. Les caractéristiques qualitatives concernant la résistance à la rupture permettant de tricoter ou de tisser un tel fil ne sont pas atteintes avec un tel procédé et une matière première constituée entièrement de matière recyclée. Les caractéristiques qualitatives concernant la résistance à l'abrasion, le boulochage, ou la résistance au frottement ne sont également pas atteintes avec un tel procédé et un fil issu de matière première 100% recyclée.

La présente invention vise à pallier ces inconvénients et à apporter d'autres avantages. Plus précisément, elle consiste en un procédé de fabrication d'un fil en filature de type cycle carde, à partir de déchets textiles, caractérisé en ce qu'il comprend les étapes suivantes :
- pulvériser sur les déchets textiles une émulsion à base d'huile,
- démailler les déchets textiles en les transportant sur une table d'alimentation, puis entre deux cylindres alimentaires, débouchant sur un premier tambour rotatif dont la surface cylindrique est recouverte de pointes, la densité de pointes étant comprise entre environ 2,4 et 3,6 pointes au centimètre carré,
- effilocher les déchets textiles sortant dudit premier tambour rotatif en les transportant sur une table d'alimentation, puis entre deux cylindres alimentaires, débouchant sur un deuxième tambour rotatif dont la surface cylindrique est recouverte de pointes, la densité de pointes étant supérieure à celle dudit premier tambour rotatif, en vue d'obtenir des fibres aptes à servir à la constitution du fil,
- introduire les fibres issus du deuxième tambour dans un premier groupe cardant,
- introduire les fibres issus du premier groupe cardant dans un deuxième groupe cardant afin d'obtenir un voile de fibres,
- diviser ledit voile de fibres en une pluralité de mèches, apte chacune à former un fil,
- enrouler puis filer lesdites mèches, afin d'obtenir une pluralité de fils enroulés sur une pluralité de canettes, respectivement.

Le procédé selon l'invention permet d'allonger la fibre issue de l'étape telle que définie de démaillage et d'effilochage, par rapport à l'étape correspondante de l'état de la technique, et ainsi de conférer au fil issu du procédé une résistance à la traction compatible avec les exigences de tricotage et de tissage du fil. En effet, la réduction de la densité des pointes du premier tambour, par rapport à une densité plus élevée de pointes avec les procédés de l'art antérieur, permet de diminuer, voire d'éviter que les fibres constitutives des déchets textiles soient brisées lors du démaillage ; c'est à dire que le procédé selon l'invention permet de conserver le plus possible la longueur des fibres constitutives des déchets textiles utilisés. La densité courante de pointes sur un tambour de démaillage conventionnel est de 8 pointes au centimètre carré plus ou moins 8 à 12 % selon les textiles à traiter. Selon le procédé de l'invention, la maille est ainsi ouverte mais non brisée en vue d'une préparation en douceur pour l'effilochage. La pulvérisation d'une émulsion à base d'huile sur les déchets textiles avant l'étape de démaillage permet de donner du gonflant aux fibres et favorise un démaillage en douceur, pour conserver un maximum de longueur de fibres. La densité de pointes supérieure sur le deuxième tambour permet une progressivité d'ouverture des fibres et donc réduit encore le risque de rupture des fibres.

En outre, la résistance ainsi obtenue du fil, grâce à la longueur de ses fibres constitutives, le plus proche possible de la longueur des fibres initiales constitutives des déchets textiles utilisés, permet avantageusement de mettre en oeuvre le procédé selon l'invention avec une matière première entièrement constituée de matière recyclée. Les caractéristiques du fil obtenu selon le procédé suivant l'invention possèdent en outre une meilleure résistance à l'abrasion et au boulochage ainsi qu'au frottement. Le fait de proposer un procédé pouvant utiliser une matière première constituée à 100% de matière recyclée ou de déchets textiles, permet de fournir un fil dont la couleur est plus résistante à la lumière et au frottement, du fait que les déchets textiles, et donc les fibres recyclées, ont déjà vécu en produit fini, ont donc déjà été lavées plusieurs fois, et ont été soumises à des conditions extrêmes concernant la lumière, les conditions climatiques, et tout type d'agression de la vie quotidienne. Les fils obtenus suivant le procédé selon l'invention ont donc notamment une plus grande stabilité de couleur. De ce fait, la résistance des colorants à la lumière et au frottement du fil selon l'invention est souvent supérieure à celle des fils réalisés avec des fibres neuves et teintes pour la première fois.

Il y a lieu de noter que le recyclage des déchets est un problème d'environnement permanent. Grâce au procédé selon l'invention, les déchets textiles peuvent être réutilisés sans limite particulière, et ainsi permettre avantageusement à des organismes caritatifs de continuer leurs activités de récupération des vieux textiles.

Le procédé selon l'invention permet en outre d'éviter une surproduction de matières, notamment synthétiques et cellulosiques, qui sont coûteuses en énergie et souvent à risque pour l'environnement.

Le procédé selon l'invention permet en outre d'éviter l'utilisation de teinture sur les matières premières, car les coloris peuvent être obtenus par des mélanges de couleurs de textiles tous issus de la matière première recyclée, d'où une diminution des risques de pollution par rejets de matières potentiellement toxiques, et une économie d'énergie.

Selon une caractéristique avantageuse, la densité des pointes sur le deuxième tambour est comprise entre environ 2,52 et 4,8 pointes au centimètre carré.

Cette caractéristique permet de réduire voire d'éviter un raccourcissement des fibres qui sortiront du deuxième tambour rotatif.

Selon une caractéristique avantageuse, lesdites pointes sur lesdits premier et/ou deuxième tambours sont des pointes plates biseautées.

Cette caractéristique contribue à adoucir les opérations de démaillage et d'effilochage par une forme d'attaque plus douce des pointes biseautées, par comparaison aux pointes effilées et coniques plus agressives des tambours d'effilochage/démaillage conventionnels selon les procédés de l'art antérieur.

Selon une caractéristique avantageuse, lesdits deux cylindres alimentaires d'une part et ledit premier tambour d'autre part sont séparés d'une distance comprise entre 6 et 8 millimètres.

Cette caractéristique contribue à réduire, voire éviter, la rupture des fibres lors du démaillage. Cette distance dans les procédés de l'art antérieur comme celui décrit plus haut est de l'ordre de 3 mm, avec une variation de 5 à 7% en plus, soit une augmentation d'environ au moins 100% de la distance entre les cylindres alimentaires et le premier tambour avec le procédé selon l'invention.

Selon une caractéristique avantageuse, la vitesse circonférentielle des pointes dudit premier tambour rotatif est comprise entre 15 et 20 mètres par seconde. Soit par exemple pour un tambour de 1 mètre de diamètre, une vitesse de rotation de 350 tours par minute, avec une vitesse de 18,31 mètres par seconde.

Cette caractéristique contribue à un démaillage et un effilochage en douceur en évitant ou réduisant les arrachements de fibres et donc les ruptures et raccourcissement de ces fibres. Les tambours utilisés dans les procédés de l'état de l'art tournent généralement à des vitesses de rotation de l'ordre de 1000 tours par minute ou même supérieures, pour un tambour d'un mètre de diamètre, soit une vitesse linéaire de plus de 50 mètres par seconde. Ainsi, le procédé selon l'invention selon cette caractéristique avantageuse réduit la vitesse du premier tambour de plus de 50 %.

Selon une caractéristique avantageuse, la vitesse circonférentielle des pointes dudit deuxième tambour rotatif est plus lente que celle du premier tambour.

Selon une caractéristique avantageuse, ledit premier groupe cardant est équipé de garnitures présentant une pluralité de pointes formant un angle de cardage de l'ordre de 60°.

Selon les groupes conventionnels cardant, l'inclinaison de ces pointes est de l'ordre de 75° à 80°. Une inclinaison plus faible permet d'obtenir un effet de « garnettage », c'est à dire une ouvraison bien contrôlée. Cette caractéristique permet en outre d'avoir un point cardant moins important, et évite le boulochage des matières et un ménagement des fibres.

Selon une caractéristique avantageuse, la densité des pointes du premier groupe cardant est comprise entre 7 et 8 pointes par centimètre carré.

Selon une caractéristique avantageuse, ledit deuxième groupe cardant est équipé de garnitures semi-rigides.

Ces caractéristiques contribuent avec une prépondérance pour la première citée à la conservation de la longueur maximale des fibres durant les étapes de cardage visant essentiellement à fabriquer le voile.

Selon une caractéristique avantageuse, les garnitures semi-rigides dudit deuxième groupe cardant comprennent des pointes biconvexes.

Cette caractéristique propose une forme de pointe plus fluide moins agressive et susceptible de réduire encore les ruptures de fibres.

Selon une caractéristique avantageuse, la densité des pointes du deuxième groupe cardant est comprise entre 25 et 30 pointes par centimètre carré, de préférence comprise entre 28 et 29 pointes.

Dans les systèmes conventionnels de cardage, la densité de ces pointes est supérieure de 18 % à 22 % environ à fil d'acier identique.

Selon une caractéristique avantageuse, le procédé suivant l'invention consiste à introduire une étape de pré-étirage respectif des mèches entre deux manchons frotteurs avant l'étape d'enroulement desdites mèches.

Cette caractéristique permet de rentrer dans l'appareil diviseur avec un voile plus épais, plus régulier, et la fibre moins brisée.

La présente invention se rapporte en outre à un fil obtenu avec un procédé suivant l'invention, caractérisé en ce qu'il comprend 38% de fibres de laine, 22 % de fibres de coton, 28 % de fibres en polyamide, 7 % de fibres acryliques, et 5 % de fibres autres diverses.

D'autres caractéristiques et avantages apparaîtront à la lecture qui suit d'un exemple de mode de réalisation d'un procédé selon l'invention de fabrication d'un fil en filature de type cycle carde, à partir de déchets textiles, accompagnée des dessins annexés, exemple donné à titre illustratif non limitatif.

L'exemple de procédé qui suit est adapté pour fonctionner avec des matières premières textiles issues à 100 % de déchets textiles destinés au recyclage, et est destiné à fabriquer ainsi un fil comportant 100% de fibres régénérées.
La figure 1 est une vue de côté d'une représentation schématique des moyens permettant de mettre en oeuvre une étape de l'exemple de mode de réalisation du procédé selon l'invention.
La figure 2 est une vue de côté d'un détail agrandi de la figure 1.
La figure 3 est une vue de côté d'un détail agrandi des moyens permettant de mettre en oeuvre une autre étape de l'exemple de mode de réalisation du procédé selon l'invention.
La figure 4 est une vue de face du détail agrandi de la figure 3.
La figure 5 est une vue en coupe du détail agrandi de la figure 3, suivant la ligne I-I de la figure 4.
La figure 6 est une vue de côté d'une représentation schématique des moyens permettant de mettre en oeuvre une autre étape de l'exemple de mode de réalisation du procédé selon l'invention.

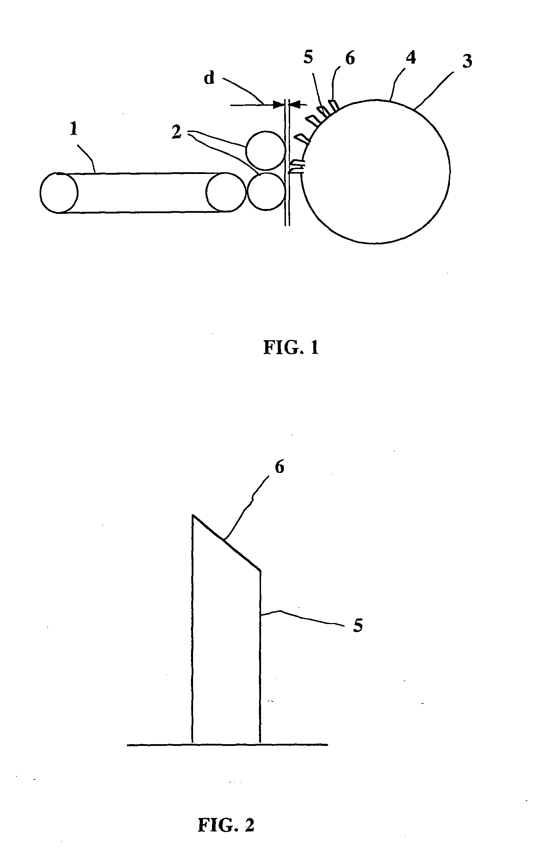

Le procédé de fabrication d'un fil en filature de type cycle carde, à partir de déchets textiles avantageusement composés de 100 % de matières destinées au recyclage, comprend avantageusement les étapes suivantes :
- les déchets textiles destinés au recyclage sont le cas échéant classés par nuances de couleurs et composants, les composants pouvant être d'origine végétale, animale, ou synthétique en mélange ou en 100% ;
- les articles subissent ensuite avantageusement une étape de délissage, consistant en une extraction des corps durs, du type bouton, fermeture éclair, étiquette, etc...
- pulvériser sur les déchets textiles une émulsion à base d'huile, de préférence de la manière suivante : faire des couches superposées en pulvérisant sur chaque couche une émulsion d'huile et d'eau à une température de 25° à 35° environ, suivant les textiles à travailler ; laisser macérer les mélanges pendant 10 à 12 heures avant de les travailler, suivant les matières à traiter ; une telle opération donne avantageusement du gonflant aux fibres et favorise un démaillage en douceur, pour conserver un maximum de longueur de fibres,
- démailler les déchets textiles en les transportant sur une table d'alimentation 1, puis entre deux cylindres alimentaires 2, débouchant sur un premier tambour 3 rotatif dont la surface cylindrique 4 est recouverte de pointes 5, comme représenté sur la figure 1 (une partie seulement des pointes a été représentée), la densité de pointes étant comprise entre environ 2,4 et 3,6 pointes au centimètre carré, par exemple trois pointes au centimètre carré ; de préférence le réglage des cylindres alimentaires 2 sera très peu serré pour favoriser un glissement entre fibres et non un déchirement, un réglage traditionnel étant environ 30 % plus serré ; en outre, de manière avantageuse l'alimentation en quantité et en volume sera de 50 % en moins que dans un procédé traditionnel de démaillage/effilochage ; le réglage des remontées des chiffons sera presque nul alors qu'en traditionnel il est très important, environ 30 à 40 % ; il y a lieu de préciser que le démaillage spécifique selon l'invention consiste à ouvrir les matières textiles en évitant le plus possible de briser les fibres et en cherchant à obtenir le maximum de longueur ;
- effilocher les déchets textiles sortant dudit premier tambour 3 rotatif en les transportant sur une table d'alimentation, puis entre deux cylindres alimentaires, débouchant sur un deuxième tambour rotatif (non représentés) dont la surface cylindrique est recouverte de pointes, la densité de pointes étant supérieure à celle dudit premier tambour 3 rotatif, en vue d'obtenir des fibres aptes à servir à la constitution du fil, par exemple une densité de quatre pointes au centimètre carré, avec une variation préférentielle possible de 5 % à 10 % de pointes supplémentaires à celles du premier tambour ; l'étape d'effilochage est avantageusement suivie d'une ventilation des fibres obtenues ; les étapes de démaillage et d'effilochage ci-dessus peuvent avantageusement être réalisées sur une effilocheuse traditionnelle à deux tambours en série avec les modifications essentielles et avantageuses décrites suivant l'invention, ; l'effilochage traditionnel consiste à ouvrir les textiles et à briser le plus court possible, dans certains cas jusqu'à trois tambours successifs étant nécessaire,
- réaliser avantageusement un feutre de laboratoire pour obtenir les coloris, analyser les composants et contrôler la longueur des fibres moyennes, permettant de déterminer un mélange de fibres,
- le mélange est par exemple et avantageusement mis en préparation en deux cycles comme suit :
   - premier cycle : la matière est de préférence passée dans un battoir de façon à éliminer les corps durs et les fibres courtes, et dépoussiérée,
      - la matière est ensuite avantageusement passée dans un loup carde pour la mélanger et la préparer à recevoir une première pulvérisation d'ensimage (mélange d'huile, d'eau et d'anti-statique), puis sur un plateau tournant pour lubrifier les fibres, ceci afin d'éviter de les briser à l'opération suivante,
      - la matière est ensuite avantageusement passée dans un loup brisoir pour extraire les corps durs ou chiquettes, mélanger les fibres et ouvrir les fils trop longs,
      - la matière est ensuite avantageusement envoyée par transport pneumatique dans un premier casier mélangeur à l'aide de girators temporisés afin de réaliser des couches superposées et régulières,
      - la matière est ensuite avantageusement extraite du premier casier mélangeur par une fraise, qui est un tapis vertical à pointes, de manière à reprendre la matière du bas vers le haut et ainsi accentuer le mélange des fibres et des couleurs,
   - deuxième cycle : le mélange est préparée, afin d'obtenir un mélange des fibres et des couleurs ainsi qu'une meilleure répartition de l'ensimage :
      - la matière est avantageusement passée dans un loup carde pour la mélanger et la préparer à recevoir une deuxième pulvérisation d'ensimage (mélange d'huile, d'eau et d'anti-statique), puis sur un plateau tournant pour lubrifier les fibres, ceci afin d'éviter de les briser à l'opération suivante,
      - la matière est ensuite avantageusement passée dans un loup brisoir, d'une manière identique au premier cycle,
      - la matière est ensuite avantageusement envoyée par transport pneumatique dans un deuxième casier mélangeur d'une manière identique au premier cycle,
      - la matière est ensuite avantageusement extraite du deuxième casier mélangeur d'une manière identique au premier cycle, par transport pneumatique dans des casiers de stockage munis de girators,
- après deux à trois jours de mise au repos avantageux des matières, ces dernières sont envoyées par transport pneumatique dans des silos à niveau constant,
- introduire les fibres issus du deuxième tambour, et avantageusement issus de la préparation du mélange comme décrit ci-dessus, dans un premier groupe cardant, par exemple de type briseuse, équipé de garnitures rigides à profil avantageusement spécial comme décrit plus loin,
- introduire les fibres issus du premier groupe cardant dans un deuxième groupe cardant, par exemple de type briseuse équipé de garnitures rigides à profil avantageusement spécial et semi-rigide auto-débourrantes spécifiques, comme décrit plus loin, afin d'obtenir un voile de fibres, suivi avantageusement d'un cardage sur assortiment de cardes (trois passages),
- diviser ledit voile de fibres en une pluralité de mèches, apte chacune à former un fil, par exemple par une prise en charge du voile par des lanières diviseuses,
- enrouler puis filer lesdites mèches, afin d'obtenir une pluralité de fils enroulés sur une pluralité de canettes, respectivement ; l'étape de filage consiste essentiellement à dévider avantageusement les canettes de mèche et filer ensuite la mèche, sur des continus automatiques selon tous procédés connus, par exemple sur des continus automatiques de type « Selfstiro » à trois points d'étirage : laminage, fausse torsion, et torsion ; le réglage du numéro métrique et de la résistance est fait suivant la qualité à obtenir ; la mise au poids du fil est effectuée puis le fil enroulé sur canettes,
- ensuite, les canettes sont avantageusement dévidées par exemple sur des bobinoirs de type « Autoconer 338 » à alimentation automatique, le fil est épuré et les défauts éliminés,
- ensuite, on réalise avantageusement un paraffinage et un bobinage du fil sur cônes carton ou plastique garantissant une tension régulière duy départ à la fin du cône grâce à un système d'auto-tension,
- ensuite, selon la demande, on peut fixer la torsion des fils en autoclave, assembler et retordre en plusieurs fils.

Dans l'exemple décrit ci-dessus du mode de réalisation selon l'invention de fabrication d'un fil en filature de type cycle carde, à partir de déchets textiles avantageusement composés de 100 % de matières destinées au recyclage, la densité des pointes sur le deuxième tambour sera de préférence comprise entre environ 2,52 et 4,8 pointes au centimètre carré.

Comme représenté sur la figure 2, les pointes 5 sur lesdits premier et/ou deuxième tambours sont des pointes plates biseautées, par exemple des pointes 5 comportant un corps cylindrique à section diverse au choix, notamment circulaire, elliptique, etc... La pointe biseautée est obtenue par exemple par l'usinage d'un plan incliné 6 en bout de pointe, interceptant la surface cylindrique du corps de pointe, comme représenté sur la figure 2 en vue latérale. Ainsi, la pointe 5 attaque le textile par ce plan incliné 6 évitant l'arrachement des fibres, comme cela est le cas avec des pointes coniques des tambours de l'art antérieur.

De manière avantageuse, les deux cylindres alimentaires 2 et le premier tambour 3 sont séparés d'une distance d comprise entre 6 et 8 millimètres, de préférence une distance de 6 millimètres.

La vitesse circonférentielle des pointes du premier tambour 3 rotatif est de préférence comprise entre 15 et 20 mètres par seconde, soit par exemple pour un tambour de 1 mètre de diamètre, une vitesse de rotation de 350 tours par minute, avec une vitesse circonférentielle de 18,31 mètres par seconde. Cette vitesse peut cependant varier en plus ou en moins selon les textiles à travailler.

La vitesse circonférentielle des pointes du deuxième tambour rotatif sera de préférence plus lente que celle du premier tambour.

Le premier groupe cardant est de préférence équipé de garnitures présentant une pluralité de pointes formant un angle de cardage de l'ordre de 60°, avec une densité de pointes comprise entre 7 et 8 pointes par centimètre carré, par exemple 7,44 pointes au centimètre carré (48 pointes par pouce carré).

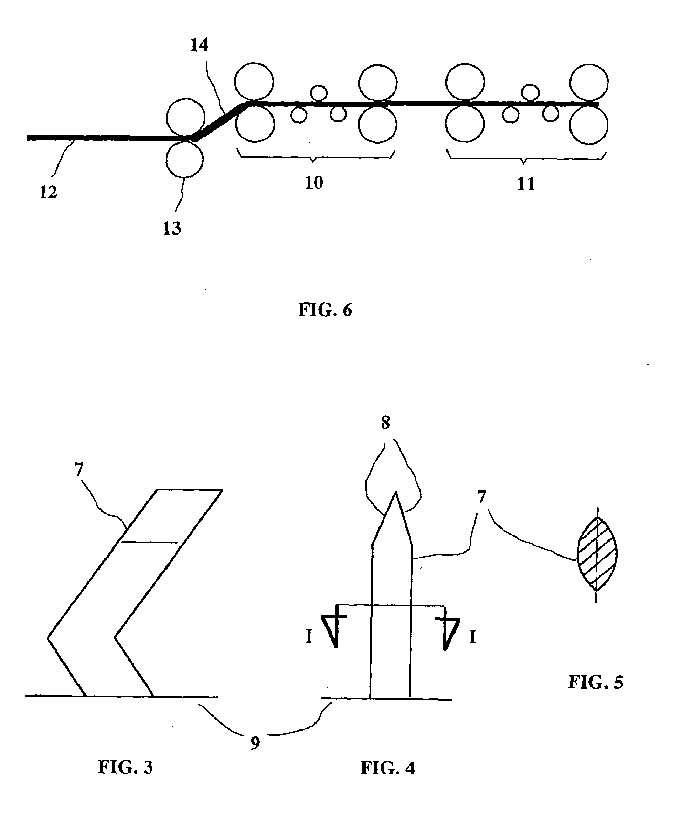

Le deuxième groupe cardant est avantageusement équipé de garnitures semi-rigides, comprenant de préférence des pointes biconvexes 7 en acier retrempé à aiguisage latéral 8 sur feutre 9 mousse densifié, dont la densité est par exemple comprise entre 25 et 30 pointes par centimètre carré, par exemple 28,67 pointes au centimètre carré (185 pointes par pouce carré) ; les figures 3 à 5 représentent un mode de réalisation d'une pointe biconvexe 7, respectivement en vue latérale, de face et en coupe suivant la ligne II de la figure 4 ; les pointes biconvexes présentent une bonne solidité en bout de pointes.

De manière avantageuse, on introduit une étape de pré-étirage respectif des mèches entre deux manchons frotteurs avant l'étape d'enroulement des mèches, comme représenté sur la figure 6. La figure 6 représente un premier groupe 10 de manchons frotteurs, suivi d'un deuxième groupe 11 de manchons frotteurs qui peut être identique au premier groupe ; le pré-étirage des mèches 14 consiste à faire tourner les cylindres du deuxième groupe 11 plus vite que les cylindres du premier groupe 10, étirant ainsi les mèches 14 dans une zone comprise entre les premier 10 et deuxième 11 groupes de manchons frotteurs. Sur la figure 6, le voile de fibres est référencé en 12 entrant dans le diviseur 13 avant de pénétrer dans le premier groupe de manchons frotteur.

Un exemple de fil obtenu avec le procédé décrit ci-dessus présente avantageusement la composition suivante : 38% de fibres de laine, 22 % de fibres de coton, 28 % de fibres en polyamide, 7 % de fibres acryliques, et 5 % de fibres autres diverses.

## Revendications

1. Procédé de fabrication d'un fil en filature de type cycle carde, à partir de déchets textiles, ***caractérisé en ce qu'**il* comprend les étapes suivantes :
- pulvériser sur les déchets textiles une émulsion à base d'huile,
- démailler les déchets textiles en les transportant sur une table d'alimentation (1), puis entre deux cylindres alimentaires (2), débouchant sur un premier tambour (3) rotatif dont la surface cylindrique (4) est recouverte de pointes (5), la densité de pointes étant comprise entre environ 2,4 et 3,6 pointes au centimètre carré,
- effilocher les déchets textiles sortant dudit premier tambour rotatif en les transportant sur une table d'alimentation, puis entre deux cylindres alimentaires, débouchant sur un deuxième tambour rotatif dont la surface cylindrique est recouverte de pointes, la densité de pointes étant supérieure à celle dudit premier tambour rotatif, en vue d'obtenir des fibres aptes à servir à la constitution du fil,
- introduire les fibres issus du deuxième tambour dans un premier groupe cardant,
- introduire les fibres issus du premier groupe cardant dans un deuxième groupe cardant afin d'obtenir un voile de fibres,
- diviser ledit voile de fibres en une pluralité de mèches, apte chacune à former un fil,
- enrouler puis filer lesdites mèches, afin d'obtenir une pluralité de fils enroulés sur une pluralité de canettes, respectivement.

2. Procédé suivant la revendication 1, ***caractérisé en ce que*** la densité des pointes sur le deuxième tambour est comprise entre environ 2,52 et 4,8 pointes au centimètre carré.

3. Procédé suivant la revendication 1 ou 2, ***caractérisé en ce que*** lesdites pointes sur lesdits premier et/ou deuxième tambours sont des pointes plates biseautées.

4. Procédé suivant l'une quelconque des revendications 1 à 3, ***caractérisé en ce que*** lesdits deux cylindres alimentaires et ledit premier tambour sont séparés d'une distance comprise entre 6 et 8 millimètres.

5. Procédé suivant l'une quelconque des revendications 1 à 4, ***caractérisé en ce que*** la vitesse circonférentielle des pointes dudit premier tambour rotatif est comprise entre 15 et 20 mètres par seconde.

6. Procédé suivant l'une quelconque des revendications 1 à 5, ***caractérisé en ce que*** la vitesse circonférentielle des pointes dudit deuxième tambour rotatif est plus lente que celle du premier tambour.

7. Procédé suivant l'une quelconque des revendications 1 à 6, ***caractérisé en ce que*** ledit premier groupe cardant est équipé de garnitures présentant une pluralité de pointes formant un angle de cardage de l'ordre de 60°.

8. Procédé suivant la revendication 7, ***caractérisé en ce que*** la densité des pointes du premier groupe cardant est comprise entre 7 et 8 pointes par centimètre carré.

9. Procédé suivant l'une quelconque des revendications 1 à 8, ***caractérisé en ce que*** ledit deuxième groupe cardant est équipé de garnitures semi-rigides.

10. Procédé suivant l'une quelconque des revendications 1 à 9, ***caractérisé en ce que*** les garnitures semi-rigides dudit deuxième groupe cardant comprennent des pointes biconvexes.

11. Procédé suivant la revendication 9 ou 10, ***caractérisé en ce que*** la densité des pointes du deuxième groupe cardant est comprise entre 25 et 30 pointes par centimètre carré.

12. Procédé suivant l'une quelconque des revendications 1 à 11, ***caractérisé en ce qu'**il* consiste à introduire une étape de pré-étirage respectif des mèches entre deux manchons frotteurs avant l'étape d'enroulement desdites mèches.

13. Fil obtenu avec le procédé suivant l'une quelconque des revendications 1 à 11, ***caractérisé en ce qu'**il* comprend 38% de fibres de laine, 22 % de fibres de coton, 28 % de fibres en polyamide, 7 % de fibres acryliques, et 5 % de fibres autres diverses.

## Claims

1. Method for manufacturing a woolen-type spun yarn using textile waste, **characterised in that** it comprises the following steps:
- spraying an oil-based emulsion on the textile waste,
- unravelling the waste by transporting it on a supply table (1), then between two supply cylinders (2), leading to a first rotating drum (3) of which the cylindrical surface (4) is covered with spikes (5), the spike density being between about 2.4 and 3.6 spikes per square centimetre,
- fraying the textile waste leaving the said first rotating drum by transporting it on a supply table, then between two supply cylinders, leading to a second rotating drum whose cylindrical surface is covered with spikes, the spike density being greater than that of the first rotating drum, so as to obtain fibres suitable for use in forming the yarn,
- introducing the fibres from the second drum into a first carding unit,
- introducing the fibres from the first carding unit into a second carding unit so as to obtain a web of fibres,
- dividing the said web of fibres into a plurality of rovings, each capable of forming a yarn,
- winding then spinning the said rovings, so as to obtain a plurality of yarns wound respectively on a plurality of bobbins.

2. Method according to claim 1, **characterised in that** the density of the spikes on the second drum is between about 2.52 and 4.8 spikes per square centimetre.

3. Method according to claim 1 or 2, **characterised in that** the said spikes on the said first and/or second drums are bevelled flat spikes.

4. Method according to any one of claims 1 to 3, **characterised in that** the said two supply cylinders and the said first drum are separated by a distance of between 6 and 8 millimetres.

5. Method according to any one of claims 1 to 4, **characterised in that** the circumferential speed of the spikes of the said first rotating drum is between 15 and 20 metres per second.

6. Method according to any one of claims 1 to 5, **characterised in that** the circumferential speed of the spikes of the said second rotating drum is slower than that of the first drum.

7. Method according to any one of claims 1 to 6, **characterised in that** the said first carding unit is fitted with card clothings having a plurality of spikes forming a carding angle of about 60°.

8. Method according to claim 7, **characterised in that** the density of the spikes of the first carding unit is between 7 and 8 spikes per square centimetre.

9. Method according to any one of claims 1 to 8, **characterised in that** said second carding unit is equipped with semi-rigid card clothings.

10. Method according to any one of claims 1 to 9, **characterised in that** the semi-rigid card clothings of the said second carding unit include biconvex spikes.

11. Method according to claim 9 or 10, **characterised in that** the density of the spikes of the second carding unit is between 25 and 30 spikes per square centimetre.

12. Method according to any one of claims 1 to 11, **characterised in that** it involves introducing a step of pre-drawing the respective rovings between two trotter sleeves before the step of winding the said rovings.

13. Yarn obtained by the method according to any one of claims 1 to 11, **characterised in that** it comprises 38% wool fibres, 22% cotton fibres, 28% polyamide fibres, 7% acrylic fibres, and 5% various other fibres.

## Patentansprüche

1. Verfahren zur Herstellung eines Garns in der Streichgarnspinnerei aus Textilabfällen, **dadurch gekennzeichnet, dass** es die Schritte umfasst, dass:
- eine Emulsion auf Ölbasis auf die Textilabfälle aufgesprüht wird,
- die Textilabfälle aufgelöst werden, indem sie auf einem Transporttisch (1) und anschließend zwischen zwei Zuführwalzen (2) befördert werden, von wo aus sie auf einen ersten Dreh-Tambour (3) gelangen, dessen Zylinderoberfläche (4) mit Spitzen (5) bedeckt ist, wobei die Spitzendichte bei ungefähr 2,4 bis 3,6 Spitzen je Quadratzentimeter liegt,
- die aus dem ersten Dreh-Tambour austretenden Textilabfälle zerfasert werden, indem sie auf einem Transporttisch und anschießend zwischen zwei Zuführwalzen befördert werden, von wo aus sie auf einen zweiten Dreh-Tambour gelangen, dessen Zylinderoberfläche mit Spitzen bedeckt ist, wobei im Hinblick auf die Gewinnung von für die Garnbildung geeigneten Fasern die Spitzendichte höher als jene des ersten Dreh-Tambours ist,
- die aus dem zweiten Tambour austretenden Fasern in eine erste Kardiergruppe eingeführt werden,
- die aus der ersten Kardiergruppe austretenden Fasern zur Gewinnung eines Faservlieses in eine zweite Kardiergruppe eingeführt werden,
- das Faservlies in eine Mehrzahl von Lunten aufgeteilt wird, die jeweils zur Bildung eines Garns geeignet sind,
- die Lunten aufgewickelt und anschließend versponnen werden, um eine Mehrzahl von Garnen zu gewinnen, die jeweils auf eine Mehrzahl von Spulen aufgewickelt werden.

2. Verfahren nach Anspruch 1, **dadurch gekennzeichnet, dass** die Dichte der Spitzen auf dem zweiten Tambour bei ungefähr 2,52 bis 4,8 Spitzen je Quadratzentimeter liegt.

3. Verfahren nach Anspruch 1 oder 2, **dadurch gekennzeichnet, dass** es sich bei den Spitzen auf dem ersten und/oder zweiten Tambour um flach abgeschrägte Spitzen handelt.

4. Verfahren nach einem der Ansprüche 1 bis 3, **dadurch gekennzeichnet, dass** die beiden Zuführwalzen und der erste Tambour einen Abstand von 6 bis 8 Millimeter voneinander aufweisen.

5. Verfahren nach einem der Ansprüche 1 bis 4, **dadurch gekennzeichnet, dass** die Umfangsgeschwindigkeit der Spitzen des ersten Dreh-Tambours bei 15 bis 20 Meter pro Sekunde liegt.

6. Verfahren nach einem der Ansprüche 1 bis 5, **dadurch gekennzeichnet, dass** die Umfangsgeschwindigkeit der Spitzen des zweiten Dreh-Tambours langsamer als jene des ersten Tambours ist.

7. Verfahren nach einem der Ansprüche 1 bis 6, **dadurch gekennzeichnet, dass** die erste Kardiergruppe mit Garnituren ausgestattet ist, welche eine Mehrzahl von Spitzen aufweisen, die einen Kardierwinkel in einer Größenordnung von 60° bilden.

8. Verfahren nach Anspruch 7, **dadurch gekennzeichnet, dass** die Dichte der Spitzen der ersten Kardiergruppe bei 7 bis 8 Spitzen pro Quadratzentimeter liegt.

9. Verfahren nach einem der Ansprüche 1 bis 8, **dadurch gekennzeichnet, dass** die zweite Kardiergruppe mit halbsteifen Garnituren ausgestattet ist.

10. Verfahren nach einem der Ansprüche 1 bis 9, **dadurch gekennzeichnet, dass** die halbsteifen Garnituren der zweiten Kardiergruppe bikonvexe Spitzen umfassen.

11. Verfahren nach Anspruch 9 oder 10, **dadurch gekennzeichnet, dass** die Dichte der Spitzen der zweiten Kardiergruppe bei 25 bis 30 Spitzen pro Quadratzentimeter liegt.

12. Verfahren nach einem der Ansprüche 1 bis 11, **dadurch gekennzeichnet, dass** es darin besteht, dass vor dem Schritt des Aufwickelns der Lunten jeweils ein Schritt des Vor-Streckens der Lunten zwischen zwei Reibhülsen eingeschoben wird.

13. Garn, welches mit dem Verfahren nach einem der Ansprüche 1 bis 11 gewonnen wird, **dadurch gekennzeichnet, dass** dieses 38 % Wollfasern, 22 % Baumwollfasern, 28 % Polyamidfasern, 7 % Acrylfasern und 5 % an diversen anderen Fasern umfasst.
